# EUROPEAN PATENT SPECIFICATION

(11) **EP 1 505 810 B1**
(45) Date of publication and mention of the grant of the patent: **24.01.2007**
(21) Application number: 04017633.1
(22) Date of filing: 26.07.2004
(51) Int. Cl.: H04M 1/725

(54) **Communication terminal apparatus and processing method for sending and receiving e-mail**
Kommunikationsendgerät und Verarbeitungsverfahren zum Senden und Empfangen von Email
Terminal de communication et procédé de traitement pour l'émission et la réception de courrier

(30) Priority: 04.08.2003 JP 2003286147
(43) Date of publication of application: 09.02.2005
(73) Proprietor: MATSUSHITA ELECTRIC INDUSTRIAL CO., LTD., Kadoma-shi, Osaka 571-8501 (JP)
(72) Inventor: Ota, Naomi, Nagoya-shi, Aichi-ken, 453-0034 (JP)
(74) Representative: Gassner, Wolfgang

(56) References cited:
- EP-A- 1 130 890
- WO-A-01/59998
- WO-A-97/50264
- WO-A-99/65256
- WO-A-03/024069
- GB-A- 2 381 998
- US-A1- 2001 041 590

## Description

### BACKGROUND OF THE INVENTION

### Field of the Invention

The present invention relates to a communication terminal apparatus and a processing method for sending and receiving email, and in particular to a processing method for sending email and a processing method for receiving email in a communication terminal apparatus, such as a mobile phone, which has built-in email functions (which include carrier's original email functions).

### Description of the Background Art

In recent years, the use of communication terminal apparatuses, such as mobile phones and PDAs, which have built-in email functions has rapidly increased. As is known, there exist a plurality of telecommunications carriers (hereinafter referred to as "carriers") and equipment makers (hereinafter referred to as "makers") for communication terminal apparatuses. Each individual carrier or maker is trying to distinguish itself from other carriers or makers by providing the user with emoticons, special characters, etc., which are originally designed for email. Communication terminal apparatuses of a same type can be used in a plurality of Western countries. However, as most of the western countries use their own languages, communication terminal apparatuses are often required to support various languages. Due to these circumstances, in the case where email is sent and received between communication terminal apparatuses (e.g., mobile phones) of different carriers or makers, the following problems occur.

First, in the case where a sender' s mobile phone sends to a receiver's mobile phone an email containing emoticons, special characters, etc. , which are not supported by the receiver' s mobile phone, i.e., an email using character codes which are not supported by the receiver's mobile phone, the receiver's mobile phone is unable to reproduce the character codes, which are consequently displayed as unintelligible characters. Even if the receiver's mobile phone has font information associated with such character codes, the sender's intended nuance may not be conveyed properly to the receiver because font information associated with a given character code may vary from carrier to carrier, maker to maker, or mobile phone to mobile phone.

The font information is used to convert a character code into a format displayable on an output unit such as a display. Typically, the font information is in a tabulated form in which each character code is associated with its corresponding content (e.g., bitmap data or vector data) to be displayed on the screen.

The above-described problems can be solved if the communication terminal apparatus has font information associated with various character codes. However, mobile phones in actual use, available storage capacity is limited and storing a large amount of font information is not feasible.

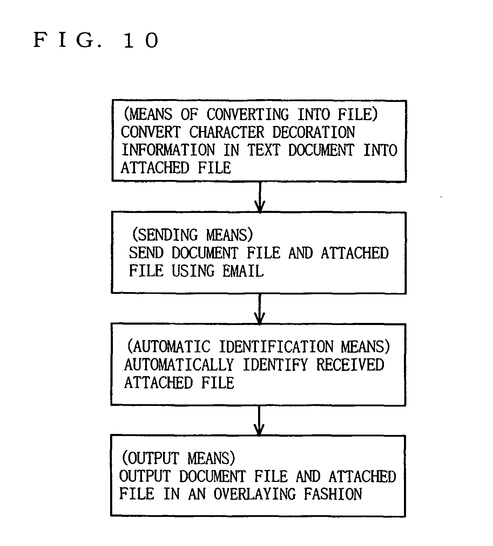

For decoration of characters and the like, there is a technique proposed in Japanese Laid-Open Patent Publication No. 11-31112, for example. According to the publication, a sender extracts information other than information about characters, i.e., information about character decoration, from a created text and converts the information into a file. Then, the sender sends a text file with the converted file attached thereto by email. The receiver automatically identifies the file attached to the email and overlays the character decoration information on specified characters in the text file. In this manner, the conventional technique makes it possible to send and receive characters together with their decoration information by email. FIG. 10 is a diagram for explaining processing for sending and receiving emailaccording to the conventional technique.

The technique described in the publication, however, relates to a technique for sending and receiving character decoration information in email, and does not relate to a method of preventing unintelligible characters from being displayed when email is sent and received between mobile phones of different carriers or makers.

Further, the technique described in the publication requires special processes, i.e., the process of converting by the sender a portion of character decoration in a text file into an attached file based on a predetermined format, and the process of overlaying by the receiver the text file and the attached file (character decoration information). The processing load of these processes is heavy for limited-throughput mobile phones, etc.

A sender's communication terminal apparatus in accordance with the preamble of claim 1, a receiver's communication terminal apparatus in accordance with the preamble of claim 14, a processing method for sending email in accordance with the preamble of claim 32, a processing method for receiving email in accordance with the preamble of claim 33 and respective computer programs are known from EP-A-1 130 890, US 2001/0041590 A, WO 97/50264 A, WO 01/59998 A or WO 03/024069 A.

### SUMMARY OF THE INVENTION

Therefore, an object of the present invention is to provide a communication terminal apparatus and a processing method for sending and receiving email which are capable of displaying, even if a sender's apparatus has sent an email which uses character codes not supported by a receiver' s apparatus, the content of the email without causing the processing load of the apparatus to increase and without displaying unintelligible characters on the receiver's apparatus.

A first aspect of the present invention is directed to a communication terminal apparatus having built-in email functions. To attain the object mentioned above, a communication terminal apparatus which acts as a sender of email according to the present invention comprises a determination section as a basic component, and further comprises a storage section, a file creation section, and a sending section as additional components. The determination section, storage section, file creation section, and sending section may be configured in a relay station for relaying an email sent from the communication terminal apparatus.

The determination section determines among character codes used in an email whether there is a character code whose display content needs to be sent to a receiver's apparatus. The storage section stores font information in which character codes to be used in an email are associated with their corresponding contents to be displayed on a screen. The file creation section creates a file regarding font information about the character code determined in the determination section. The sending section sends the email with the file created in the file creation section attached thereto.

Typically, the determination section determines an undisplayable character code which is unreproducible on the receiver's apparatus, as a character code whose display content needs to be sent to the receiver's apparatus. The determination may be made based on information about undisplayable character codes provided by the receiver's apparatus, or may be made based on at least one selected from the group consisting of a carrier, maker, and model of the receiver's apparatus. The carrier may be identified by one of a phone number and a domain of an email address of the receiver's apparatus. It is preferred that a character code whose font information has previously been sent be excluded from undisplayable character codes which are unreproducible on the receiver's apparatus.

Information about the carrier, maker, and model of the receiver' s apparatus may be obtained from an exchange server which relays email transmission/reception. If the exchange server has font information in which character codes to be used in an email are associated with their corresponding contents to be displayed on the screen, the exchange server can create a file regarding font information about the character codes determined in the determination section of the sender's apparatus.

It is preferred that information about displayable character codes which are reproducible on the receiver' s apparatus be held in advance in the sender's apparatus. It is desirable that the information about displayable character codes be held for each address of an address book or for each font group. It is also possible to inquire, before sending the email, the receiver's apparatus about whether the email contains any undisplayable character codes. It is convenient to store the inquiry results in an address book as information. A character code specified by a user may be determined as a character code whose display content needs to be sent to the receiver' s apparatus.

A communication terminal apparatus which acts as a receiver of email according to the present invention comprises a receiving section, a determination section, an expansion section, a storage section, and a processing section.

The receiving section receives an email. The determination section determines whether the email received by the receiving section has an attached file regarding font information in which character codes used in the email are associated with their corresponding contents to be displayed on a screen. The expansion section expands, if the determination section determines that the email has an attached file regarding font information, the file regarding font information. The storage section stores the font information obtained through the expansion process by the expansion section. The processing section reproduces character codes used in the email received by the receiving section, by referring to the font information stored in the storage section.

If a plurality of pieces of font information are present for a single character code, each piece of font information is assigned with a priority level for screen display and stored in the storage section, or each piece of font information is stored in the storage section so as to be associated with one of a sender and an email. In the former case, the processing section may select a piece of font information to be used for reproduction, in accordance with the priority levels. For example, font information which has been attached as a file to an email is assigned with the highest priority level when the email is displayed. The priority level of the font information may also be assigned by a user. In the latter case, the processing section may select a piece of font information to be used for reproduction, in accordance with a sender who has sent the email or with an email.

If a plurality of pieces of font information are present for a single character code, the processing section may use a first piece of retrieved font information to reproduce the character code, or may present a user with the plurality of pieces of font information so that the user can select one from the plurality of pieces of font information. Even in the former case, it is favorable to notify a user that the character code is reproducible even using font information other than the first piece of retrieved font information.

It is preferred that the determination section determine whether a file attached to the email is a font information file by a file name extension thereof. In the case where predetermined information indicating that font information is present is embedded in a body or header of the email by a sender's apparatus, the determination may be made by the predetermined information. Alternatively, the determination may be directly made by checking whether a body of the email contains any undisplayable character codes.

If the processing section cannot reproduce all of the character codes used in the email even by referring to the font information stored in the storage section, it is preferred that the processing section request a communication terminal apparatus which has sent the email to send further font information. In addition, in the case where the receiver' s apparatus acts to send email, the receiver's apparatus may create an email based on a user's input, using the font information stored in the storage section.

If the storage section does not have sufficient storage for storing additional font information obtained through the expansion process by the expansion section, it is preferred that one or more pieces of currently stored font information be deleted. The currently stored font information to be deleted may be determined based on at least one property thereof selected from the group consisting of a frequency of being referred to, a date of last reference, and a storage date, and possibly by user's instruction.

It is preferred that the font information stored in the storage section be deleted at the same time as all emails associated with the font information are deleted, or at the same time as an email having the font information attached thereto is deleted.

The processes performed by individual components of the above-described communication terminal apparatus can be taken as a processing method for sending email and a processing method for receiving email which provide a series of processing steps. These methods can be provided in the form of a program for causing a computer to perform a series of processing steps. The program may be installed on a computer through a computer-readable storage medium having stored thereon the program.

As described above, according to the present invention, the sender can send an email with font information about specific character codes attached thereto, so that the sender can convey the right nuance to the receiver. By allowing the receiver to set specific character codes as undisplayable character codes, the receiver can reproduce email content without displaying unintelligible characters. In addition, by allowing the sender to receive character codes undisplayable on the receiver from the receiver, the determination as to whether there is a character code whose font information needs to be sent to the receiver can be made properly and quickly.

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is a block diagram illustrating a configuration of a sender's communication terminal apparatus 1 according to an embodiment of the present invention;
FIG. 2 is a flowchart showing the flow of processing for sending email performed by the sender' s communication terminal apparatus 1 according to the embodiment of the present invention;
FIGS. 3A to 3C are diagrams showing examples of a method of associating a receiver's communication terminal apparatus 7 with font information;
FIG. 4 is a block diagram illustrating a configuration of a mail server which manages font information;
FIG. 5 is a diagram showing an exemplary email text created by a sender;
FIG. 6A is a diagram showing exemplary font information stored in a font information storage section 12;
FIG. 6B is an exemplary file created by a font information file creating section 15;
FIG. 7 is a block diagram illustrating a configuration of a receiver's communication terminal apparatus 7 according to an embodiment of the present invention;
FIG. 8 is a flowchart showing the flow of processing for receiving email performed by the receiver's communication terminal apparatus 7 according to the embodiment of the present invention;
FIG. 9 is a sequence diagram showing the flow of a request to send further font information performed by the communication terminal apparatuses 1 and 7; and
FIG. 10 is a diagram for explaining processing for sending and receiving email according to a conventional technique.

### DESCRIPTION OF THE PREFERRED EMBODIMENTS

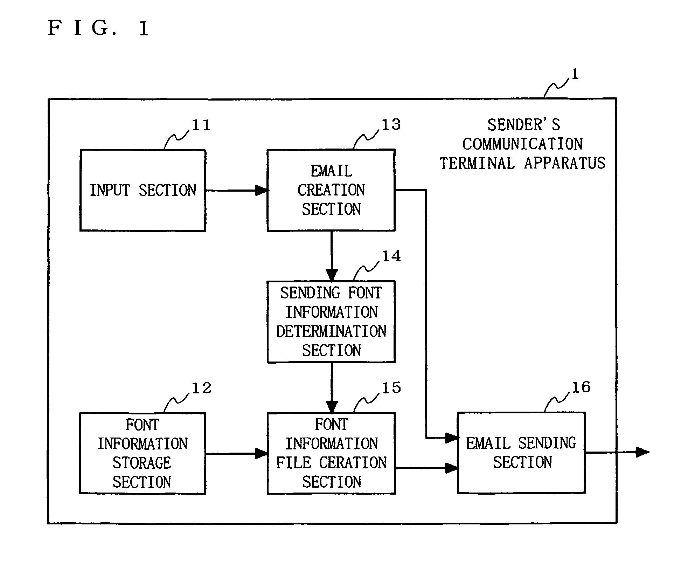

With reference to FIGS. 1 to 9, an embodiment of the present invention will be described below.

### (1) Configuration of a sender's apparatus

FIG. 1 is a block diagram illustrating a configuration of a communication terminal apparatus 1 according to an embodiment of the present invention in the case of acting as a sender's apparatus. In FIG. 1, the sender's communication terminal apparatus 1 includes an input section 11 which is a user interface; a font information storage section 12 which is a storage section; an email creation section 13 which is a processing section; a sending font information determination section 14; a font information file creation section 15; and an email sending section 16 which is a communication interface.

First, a general description of each component of the sender's communication terminal apparatus 1 will be provided.

The content of an email created by a user is inputted to the email creation section 13 through the input section 11. The font information storage section 12 stores font information about character codes usable in the communication terminal apparatus 1. The email creation section 13 creates an email based on the content of the email inputted from the input section 11. The sending font information determination section 14 receives the email created in the email creation section 13 and determines whether there is font information to be sent to a receiver's communication terminal apparatus 7 (described later). Specifically, the sending font information determination section 14 determines whether the created email uses any characters which display unintelligible characters when displayed on the receiver's communication terminal apparatus 7.

Base on the determination result by the sending font information determination section 14, the font information file creation section 15 obtains font information to be sent to the receiver's communication terminal apparatus 7, from the font information storage section 12 and creates a predetermined file. The email sending section 16 inputs the email created in the email creation section 13 and the file created in the font information file creation section 15, and sends the email with the file attached thereto to the receiver's communication terminal apparatus 7.

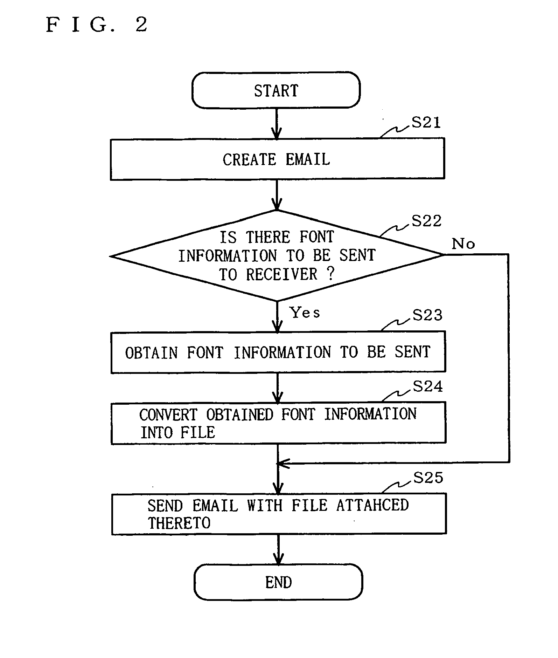

Now, with further reference to FIG. 2, a processing method for sending email performed by the sender's communication terminal apparatus 1 configured in the manner described above will be described. FIG. 2 is a flowchart showing the flow of processing for sending email performed by the sender' s communication terminal apparatus 1 according to the embodiment of the present invention.

The email creation section 13 creates an email based on the content of an email created by a user (step S21). Once the email is created, the sending font information determination section 14 determines whether there is font information to be sent to the receiver' s communication terminal apparatus 7, by checking whether the email contains any undisplayable character codes (step S22). Typically, the undisplayable character codes include character codes for which font information is specially needs to be obtained so that the receiver' s communication terminal apparatus 7 can properly reproduce (display on the screen) such character codes; and character codes whose font information is different between the sender and the receiver. In other words, the undisplayable character codes are character codes corresponding to emoticons, special characters, etc., which are originally set on the sender's communication terminal apparatus 1.

Typically, the determination by the sending font information determination section 14 is performed automatically or manually based on font information about character codes which are displayable (or undisplayable)on the receiver' s communication terminal apparatus 7. This font information may be held in advance or may be obtained upon creation of an email. In addition, the font information may be information each associated with a single character code or a font group (e.g., Japanese, Russian, italic, an emoticon of xx company, etc.).

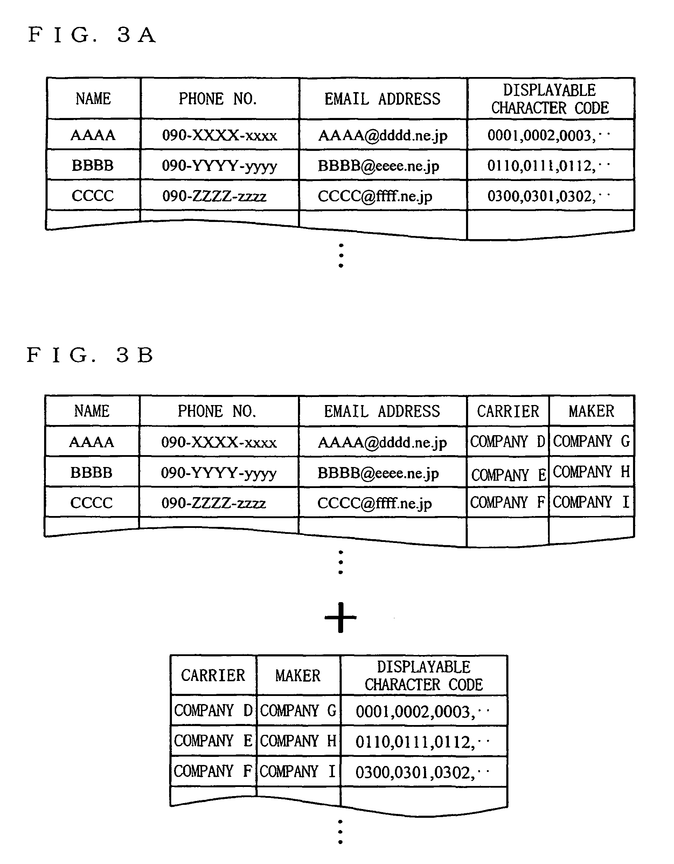

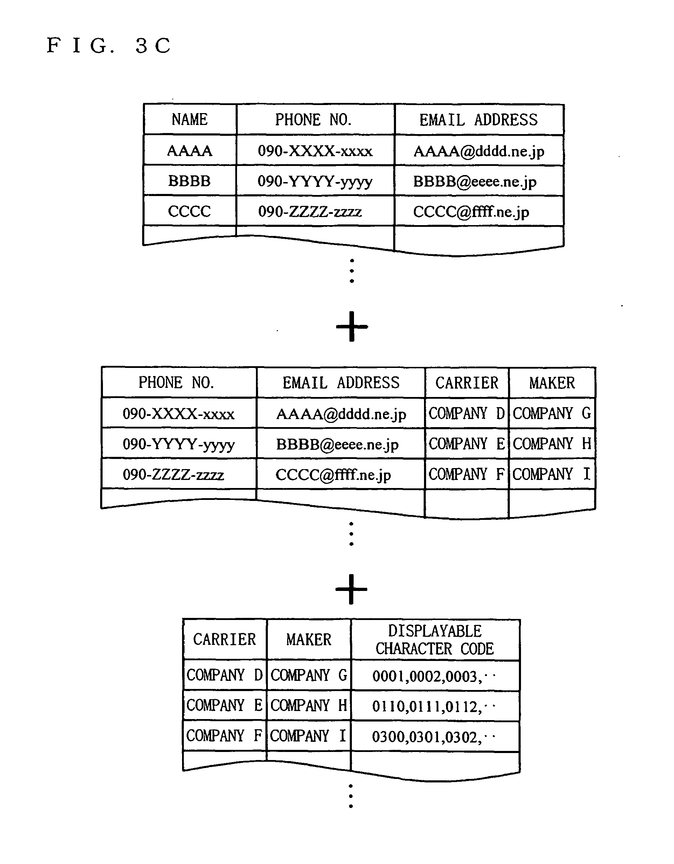

As a specific example, in the case where the font information is obtained and held in advance, the font information may be obtained such that by using a database such as an address book, displayable font information is associated with each address (see FIG. 3A). Alternatively, the font information may be created such that displayable font information is associated with each carrier, maker, or model (see FIGS. 3B and 3C). Information used to determine a carrier, maker, and model of each receiver may be stored in advance in a database, such as an address book, as personal information. The carrier may be identified by a telephone number or the domain of an email address.

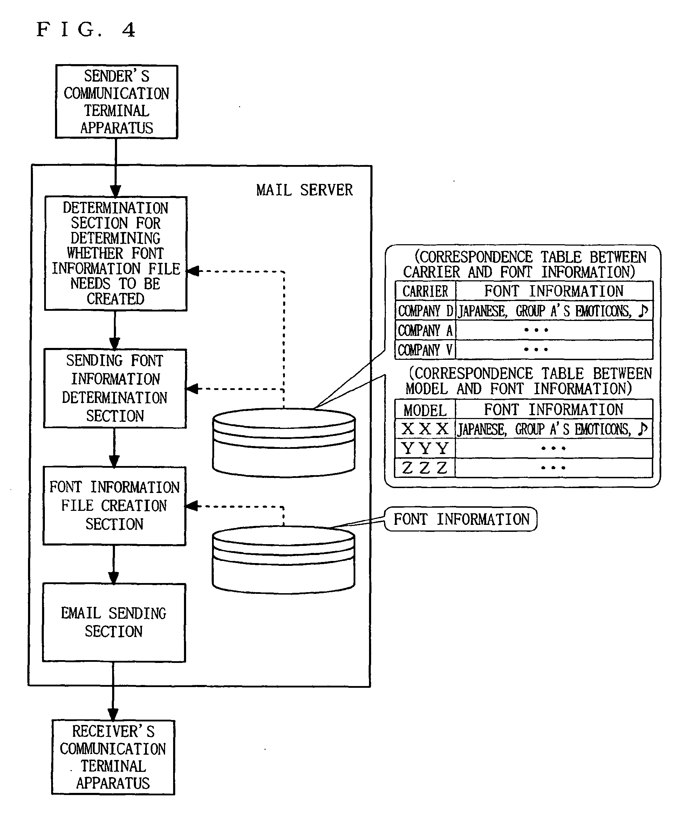

As a specific example, in the case where the font information is obtained upon creation of an email, the font information may be obtained by inquiring, before sending an email, the sender' s exchange server, mail server, or the like which holds the above-described font information. In this case, the sender's communication terminal apparatus 1 may inquire the exchange server, mail server, or the like only about whether character codes are displayable, or may allow the exchange server, mail server, or the like to attach font information about undisplayable character codes to an email (see FIG. 4). Alternatively, the sender's communication terminal apparatus 1 may directly inquire the receiver's communication terminal apparatus 7. The inquiry results may be stored in a database such as an address book.

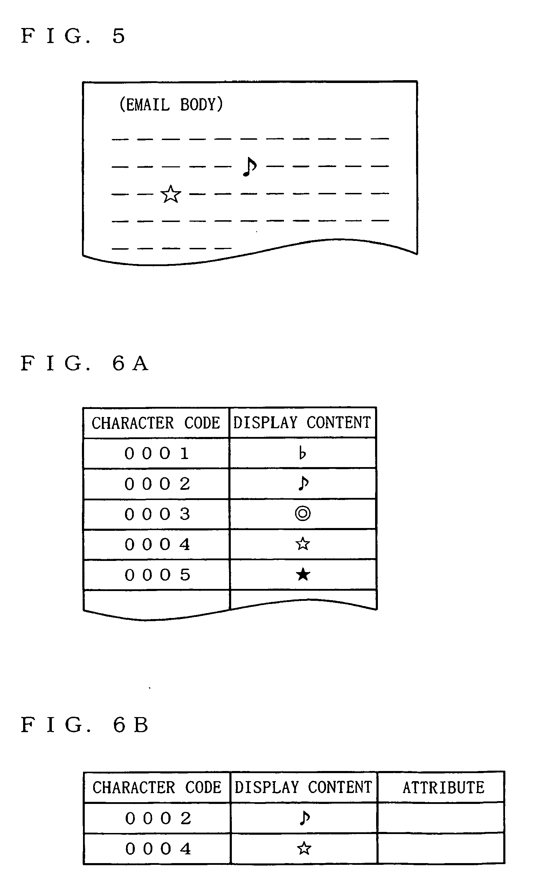

For example, if the symbol " 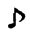 " (character code: 0002) and the symbol " 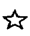 " (character code: 0004) in a text shown in FIG. 5 are not supported by the receiver's communication terminal apparatus 7, the sending font information determination section 14 determines the character codes of the symbols as undisplayable character codes.

If the sending font information determination 14 determines that the email contains undisplayable character codes (step 22, Yes), the font information file creation section 15 obtains font information about the undisplayable character codes from the font information storage section 12 (step S23). The font information file creation section 15 then converts the obtained font information into a file (step S24). In the case where there are a plurality of pieces of font information, a single file in which the plurality of pieces of font information are compiled may be created, or a plurality of files corresponding to the plurality of pieces of font information may be created. If font information about an undisplayable character code has previously been sent to the receiver, such font information may be excluded from the font information file.

The email sending section 16 sends to the receiver's communication terminal apparatus 7 the email created in the email creation section 13 with the file created in the font information file creation section 15 attached thereto (step S25).

For example, the font information storage section 12 prestores font information usable in the sender's communication terminal apparatus 1, in which individual character codes are associated with their corresponding contents to be displayed on the screen, as shown in FIG. 6A. Specifically, in the case of the text shown in FIG. 5, the font information file creation section 15 obtains font information about the character codes 0002 and 0004 which are determined as undisplayable, from the font information storage section 12. The font information file creation section 15 then creates a font information file only for the undisplayable character codes, as shown in FIG. 6B. Note that in the attribute field in FIG. 6B, information such as the data format of a display content (e.g. , bitmap data, vector data, etc.) is stored, if necessary.

### (2) Configuration of a receiver's apparatus

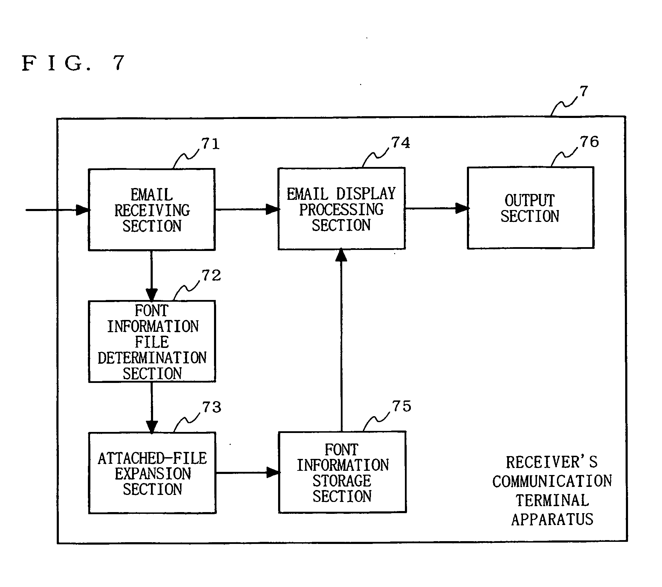

FIG. 7 is a block diagram illustrating a configuration of a communication terminal apparatus 7 according to an embodiment of the present invention in the case of acting as a receiver's apparatus. In FIG. 7, the receiver's communication terminal apparatus 7 includes an email receiving section 71 which is a communication interface; a font information file determination section 72 which is a processing section; an attached-file expansion section 73, an email display processing section 74; a font information storage section 75 which is a storage section; and an output section 76 which is a user interface.

First, a general description of each component of the receiver's communication terminal apparatus 7 will be provided.

An email sent from a sender's communication terminal apparatus 1 is received by the email receiving section 71. The font information file determination section 72 determines whether the email received by the email receiving section 71 has an attached file regarding font information. Based on the determination by the font information file determination section 72, the attached-file expansion section 73 expands a file regarding font information attached to the email to the font information storage section 75. The font information storage section 75 stores the font information obtained through the file expansion. The email display processing section 74 reproduces the content of the email received by the email receiving section 71 by referring to the font information stored in the font information storage section 75, and outputs the reproduced email content to the output section 76.

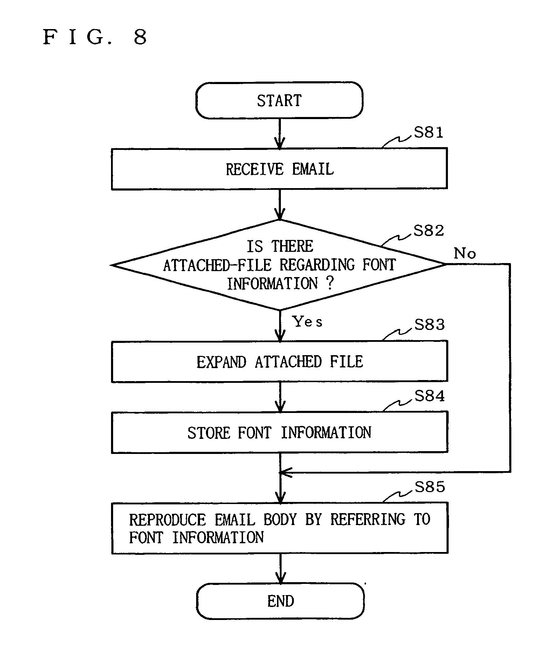

Now, with further reference to FIG. 8, a processing method for receiving email performed by the receiver's communication terminal apparatus 7 configured in the manner described above will be described. FIG. 8 is a flowchart showing the flow of processing for receiving email performed by the receiver's communication terminal apparatus 7 according to the embodiment of the present invention.

An email sent from the sender's communication terminal apparatus 1 is received by the email receiving section 71 (step S81). When the email is received, the font information file determination section 72 determines whether the email has an attached file regarding font information (step S82). As described above, the file regarding font information is obtained in such a manner that font information associated with character codes which are undisplayable on the sender's communication terminal apparatus 1 is converted into a file. To determine whether the email has an attached file regarding font information, for example, the following methods may be employed.

A first method is as follows. A unique file name extension is appended to a font information file in advance. The receiver's communication terminal apparatus 7 makes a determination by the file name extension of a file attached to the email.

A second method is as follows. The sender's communication terminal apparatus 1 embeds predetermined information indicating that font information is present, in the email body, particularly in the header. The receiver's communication terminal apparatus 7 makes a determination by checking whether the email has the predetermined information embedded in the email body or the header.

A third method is as follows. The receiver's communication terminal apparatus 7 itself directly determines whether there are any character codes which are undisplayable in the email body.

If the font information file determination section 72 determines that the email has an attached file regarding font information (step S82, Yes), the attached-file expansion section 73 expands the attached file (step S83). The attached-file expansion section 73 then stores the font information about undisplayable character codes obtained through the expansion, in the font information storage section 75 (see step S84 and FIG. 6B). The email display processing section 74 properly reproduces the undisplayable character codes by referring to the font information stored in the font information storage section 75, and then outputs the email content to the output section 76 (step S85).

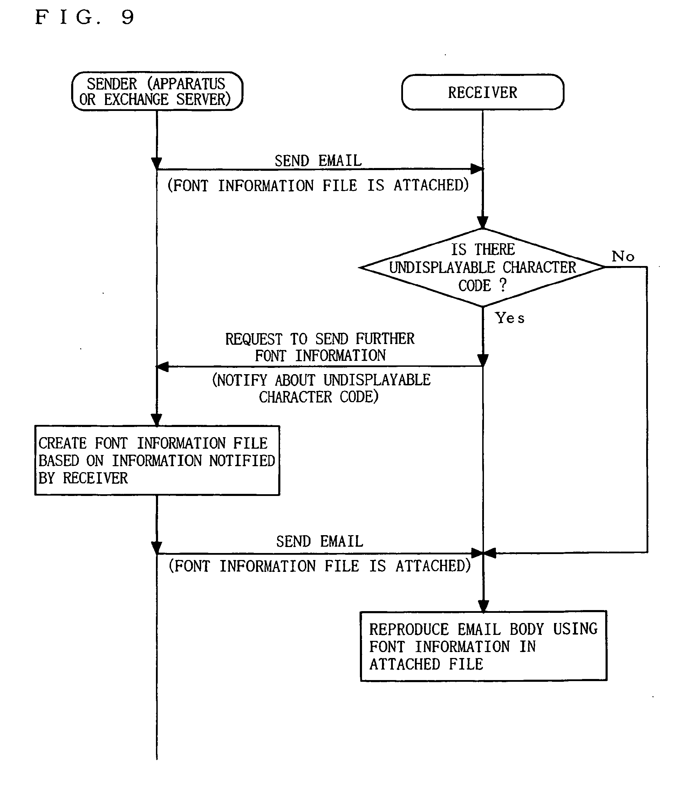

If information about the receiver's apparatus, etc., held by the sender's communication terminal apparatus 1 is not up-to-date, the body of an email may not be reproduced using only font information based on the not-up-to-date information which is attached to the email. In such a case, the receiver's communication terminal apparatus 7 requests the sender's communication terminal apparatus 1 (or the exchange server or mail server) to send further font information. FIG. 9 is a sequence diagram showing the flow of the request to send further font information.

The above-described embodiment describes the case where the font information is extracted through expansion of an attached file, however, the present invention is not limited thereto. For example, if there is a method available which allows the communication terminal apparatus to refer to font information without expanding an attached file, the communication terminal apparatus of the present invention may employ such a method.

In the case where the font information storage section 75 has a limited storage capacity and cannot continue to store additional font information obtained from the attached file of the email at step S84, one or more pieces of font information which are currently stored in the font information storage section 75 may be deleted. For example, font information may be deleted automatically by the communication terminal apparatus or manually by the receiver's instruction, based on properties such as a high frequency of being referred to for display and a recent storage date. For example, font information to be deleted may be one with a low frequency of being referred to, one whose stored date is not up-to-date, one whose last reference date is not recent, etc. Alternatively, at the same time as an email is deleted, font information contained in a file attached to the email may be deleted. In the case where a plurality of emails are associated with a piece of font information, the piece of font information may be deleted at the same time as all the associated emails are deleted. Of course, the user can specify which font information to delete or retain.

The receiver's communication terminal apparatus 7 normally stores basic font information associated with usable character codes, in a storage section other than the font information storage section 75. Thus, upon reproduction of an email, the email display processing section 74 first needs to refer to this storage section to obtain font information about general character codes and then further refers to the font information storage section 75 to obtain font information about undisplayable character codes. Hence, by storing basic font information in the font information storage section 75 in advance, the email display processing section 74 only needs, upon reproduction of an email, to refer to the font information storage section 75, which results in simplification of the process.

In the case where the font information storage section 75 stores a plurality of pieces of font information associated with a single character code, the email display processing section 74 may selectively obtain one of the plurality of pieces of font information. Typically, the selection is made as follows. A predetermined priority level is assigned to each piece of font information so that a selection is made automatically in accordance with the priority levels. The priority level may be set such that the highest priority level is assigned to font information contained in a file attached to an email, for example. Alternatively, the sender's communication terminal apparatus 1 may assign a priority level to font information in advance. By thus assigning the priority levels, email content can be reproduced with optimum efficiency.

Alternatively, the selection may be made as follows. Each piece of font information is stored in the font information storage section 75 so as to be associated with each sender or each email so that a selection is automatically made in accordance with a sender who has sent an email. In addition, font information may be selected such that a plurality of pieces of selectable font information are presented to a receiver so that the receiver specifies one from the presented font information. Further, a first piece of retrieved font information (default) maybe selected. In this case, pieces of usable font information other than the default may be presented to the user so that the user can make a selection from the notified font information.

In the case where the receiver' s communication terminal apparatus 7 acts as the sender of email, the communication terminal apparatus 7 may create an email using the font information about undisplayable character codes stored in the font information storage section 75. For example, in the case where the communication terminal apparatus 7 creates an email addressed to a destination communication terminal apparatus which had previously sent to the communication terminal apparatus 7 font information about undisplayable character codes, the communication terminal apparatus 7 may create an email body using the character codes having been sent from the destination apparatus and stored in the font information storage section 75, rather than using it's own character codes. This allows the communication terminal apparatus to use the character codes displayable on the destination apparatus already at the time of creation of an email body, and therefore it becomes unnecessary to attach font information to the email body. Accordingly, the communication resource can be effectively utilized.

As described above, according to the communication terminal apparatus and the processing method for sending and receiving email of the embodiment of the present invention, the sender sends an email with font information about undisplayable character codes attached thereto. Therefore, even if the receiver receives an email using undisplayable character codes, the receiver can reproduce the email content without displaying unintelligible characters; as a result, the sender can convey the right nuance to the receiver.

Further, in the case of a communication terminal apparatus with a limited storage capacity (e.g., mobile phone terminals), only necessary font information is provided, and thus it is possible to suppress the consumption of the storage capacity of the receiver's communication terminal apparatus 7. In addition, the process of converting font information into an attached file and the process of expanding an attached file are simple, and thus even if a communication terminal apparatus with limited throughput capacity can reproduce with a small processing load an email which uses undisplayable character codes.

The above-described embodiment describes a method in which the receiver's communication terminal apparatus 7 obtains font information about undisplayable character codes from a file attached in the sender's communication terminal apparatus 1. In addition to this method, the font information about undisplayable character codes may be obtained such that the receiver's communication terminal apparatus 7 downloads font information from an exchange server, mail server, etc. , on the network, for example.

While the invention has been described in detail, the foregoing description is in all aspects illustrative and not restrictive. It is understood that numerous other modifications and variations can be devised without departing from the scope of the invention.

## Claims

1. A sender's communication terminal apparatus (1) having built-in email functions and a sending section (16) for sending an email,
**characterized by**
a storage section (12) for storing font information in which character codes to be used in an email are associated with their corresponding contents to be displayed on a screen;
a determination section (14) for determining among character codes used in an email whether there is a character code whose display content needs to be sent to a receiver's apparatus;
a file creation section (15) for creating a file containing font information about the character code determined in the determination section (14); and
the sending section (16) being adapted for sending the email with the file created in the file creation section (15) attached thereto.

2. The sender's communication terminal apparatus according to claim 1, wherein the determination section (14) determines an undisplayable character code which is unreproducible on the receiver's apparatus, as a character code whose display content needs to be sent to the receiver's apparatus.

3. The sender's communication terminal apparatus according to claim 2, wherein the determination section (14) makes a determination based on information about undisplayable character codes provided by the receiver's apparatus.

4. The sender's communication terminal apparatus according to claim 2, wherein the undisplayable character code is determined based on at least one selected from the group consisting of a carrier, maker, and model of the receiver's apparatus.

5. The sender's communication terminal apparatus according to claim 4, wherein the carrier is identified by one of a phone number and a domain of an email address of the receiver's apparatus.

6. The sender's communication terminal apparatus according to claim 4, wherein information about the carrier, maker, and model of the receiver's apparatus is obtained from an exchange server which relays email transmission/reception.

7. The sender's communication terminal apparatus according to claim 1, wherein the determination section (14) excludes a character code whose font information has previously been sent, from undisplayable character codes which are unreproducible on the receiver's apparatus.

8. The sender's communication terminal apparatus according to claim 2, wherein information about displayable character codes which are reproducible on the receiver's apparatus is held in advance.

9. The sender's communication terminal apparatus according to claim 8, wherein the information about displayable character codes is held for each address of an address book.

10. The sender's communication terminal apparatus according to claim 9, where in the information about displayable character codes is held for each font group.

11. The sender's communication terminal apparatus according to claim 3, wherein the determination section (14) inquires, before sending the email, the receiver' s apparatus about whether the email contains any undisplayable character codes.

12. The sender's communication terminal apparatus according to claim 11, wherein the determination section (14) stores the inquiry results in an address book as information.

13. The sender's communication terminal apparatus according to claim 1, wherein the determination section (14) determines a character code specified by a user as a character code whose display content needs to be sent to the receiver's apparatus.

14. A receiver's communication terminal apparatus (7) having built-in email functions and a receiving section (71) for receiving an email,
**characterized by**
a determination section (72) for determining whether the email received by the receiving section (71) has an attached file containing font information in which character codes used in the email are associated with their corresponding contents to be displayed on a screen;
an expansion section (73) for expanding, if the determination section (72) determines that the email has an attached file, the file containing font information;
a storage section (75) for storing the font information obtained through the expansion process by the expansion section (73); and
a processing section (74) for reproducing character codes used in the email received by the receiving section (71), by referring to the font information stored in the storage section (75).

15. The receiver's communication terminal apparatus according to claim 14, wherein
if a plurality of pieces of font information are present for a single character code, each piece of font information is assigned with a priority level for screen display and stored in the storage section (75), and
the processing section (74) selects a piece of font information to be used for reproduction, in accordance with the priority levels.

16. The receiver's communication terminal apparatus according to claim 14, wherein
if a plurality of pieces of font information are present for a single character code, each piece of font information is stored in the storage section (75) so as to be associated with one of a sender and an email, and
the processing section (74) selects a piece of font information to be used for reproduction, in accordance with a sender who has sent the email or with an email.

17. The receiver's communication terminal apparatus according to claim 14, wherein if a plurality of pieces of font information are present for a single character code, the processing section (74) uses a first piece of retrieved font information to reproduce the character code.

18. The receiver's communication terminal apparatus according to claim 14, wherein if a plurality of pieces of font information are present for a single character code, the processing section (74) presents a user with the plurality of pieces of font information so that the user can select one from the plurality of pieces of font information.

19. The receiver's communication terminal apparatus according to claim 17, wherein the processing section (74) notifies a user that the character code is reproducible even using font information other than the first piece of retrieved font information.

20. The receiver's communication terminal apparatus according to claim 14, wherein the determination section (72) determines whether a file attached to the email is a font information file by a file name extension thereof.

21. The receiver's communication terminal apparatus according to claim 14, wherein the determination section (72) determines whether a file attached to the email is a font information file by predetermined information which is embedded in a body or header of the email and which indicates that font information is present.

22. The receiver's communication terminal apparatus according to claim 14, wherein the determination section (72) determines whether a file attached to the email is a font information file by checking whether a body of the email contains any undisplayable character codes.

23. The receiver's communication terminal apparatus according to claim 14, wherein if the processing section (74) cannot reproduce all of the character codes used in the email even by referring to the font information stored in the storage section (75), the processing section (74) requests a sender's communication terminal apparatus which has sent the email to send further font information.

24. The receiver's communication terminal apparatus according to claim 14, further comprising an email creation section for creating an email based on a user's input, using the font information stored in the storage section (75).

25. The receiver's communication terminal apparatus according to claim 15, wherein font information which has been attached as a file to an email is assigned with the highest priority level when the email is displayed.

26. The receiver's communication terminal apparatus according to claim 15, wherein the priority level of the font information is assigned by a user.

27. The receiver's communication terminal apparatus according to claim 14, wherein if the storage section (75) does not have sufficient storage for storing additional font information obtained through the expansion process by the expansion section (73), the storage section (75) deletes one or more pieces of currently stored font information.

28. The receiver's communication terminal apparatus according to claim 27, wherein the currently stored font information to be deleted is determined based on at least one property thereof selected from the group consisting of a frequency of being referred to, a date of last reference, and a storage date.

29. The receiver's communication terminal apparatus according to claim 27, wherein the currently stored font information to be deleted is determined by user's instruction.

30. The receiver's communication terminal apparatus according to claim 14, wherein the font information stored in the storage section (75) is deleted at the same time as all emails associated with the font information are deleted.

31. The receiver's communication terminal apparatus according to claim 14, wherein the font information stored in the storage section (75) is deleted at the same time as an email having the font information attached thereto is deleted.

32. A processing method for sending email performed by a communication terminal apparatus having built-in email functions, comprising the steps of:
creating an email based on a user's input and sending the created email,
**characterized by** the following further steps:
determining among character codes used in the created email whether there is a character code whose display content needs to be sent to a receiver's apparatus;
creating a file containing font information about the determined character code, the font information in which character codes to be used in an email are associated with their corresponding contents to be displayed on a screen; and
sending the created email with the created file attached thereto.

33. A processing method for receiving email performed by a communication terminal apparatus having built-in email functions, comprising the step of:
receiving an email; and
**characterized by** the following further steps:
determining whether the received email has an attached file containing font information in which character codes used in the email are associated with their corresponding contents to be displayed on a screen;
if it is determined that the received email has an attached file containing font information, expanding the file containing font information; and
reproducing character codes used in the received email, by referring to the font information obtained at the expansion step.

34. A computer program product comprising program code means for performing all the steps of claim 32 when said program is run on a communication terminal apparatus having built-in email functions.

35. A computer program product comprising program code means for performing all the steps of claim 33 when said program is run on a communication terminal apparatus having built-in email functions.

36. The computer program product of claim 34, being stored on a computer-readable storage medium.

37. The computer program product of claim 35, being stored on a computer-readable storage medium.

## Patentansprüche

1. Sender-Kommunikationsendgerät (1) mit eingebauten Emailfunktionen und einem Sendeabschnitt (16) zum Senden einer Email,
**gekennzeichnet durch**
einen Speicherabschnitt (12) zum Speichern von Schriftartinformation, in welcher in einer Email zu verwendende Zeichencodes mit ihren entsprechenden auf einem Bildschirm anzuzeigenden Inhalten verbunden sind;
einen Ermittlungsabschnitt (14) zum Ermitteln, ob es unter in einer Email verwendeten Zeichencodes einen Zeichencode gibt, dessen Anzeigeinhalt an ein Empfänger-Gerät gesendet werden muss;
einen Dateierstellungsabschnitt (15) zum Erstellen einer Datei, welche Schriftartinformation über den im Ermittlungsabschnitt (14) ermittelten Zeichencode enthält; und
**dadurch**, dass der Sendeabschnitt (16) zum Senden der Email mit der daran angehängten im Dateierstellungsabschnitt (15) erstellten Datei angepasst ist.

2. Sender-Kommunikationsendgerät nach Anspruch 1, wobei der Ermittlungsabschnitt (14) einen nichtanzeigbaren Zeichencode, welcher auf dem Empfänger-Gerät nicht reproduzierbar ist, als einen Zeichencode ermittelt, dessen Anzeigeinhalt an das Empfänger-Gerät gesendet werden muss.

3. Sender-Kommunikationsendgerät nach Anspruch 2, wobei der Ermittlungsabschnitt (14) eine Ermittlung auf Grund von Information über vom Empfänger-Gerät bereitgestellte nichtanzeigbare Zeichencodes durchführt.

4. Sender-Kommunikationsendgerät nach Anspruch 2, wobei der nichtanzeigbare Zeichencode ermittelt wird, gestützt auf zumindest einen, welcher aus einer Gruppe bestehend aus einem Träger, Hersteller und Modell ausgewählt wird.

5. Sender-Kommunikationsendgerät nach Anspruch 4, wobei der Träger durch eine Telefonnummer, eine Domäne oder eine Emailadresse des Empfänger-Geräts identifiziert wird.

6. Sender-Kommunikationsendgerät nach Anspruch 4, wobei Information über den Träger, den Hersteller und das Modell des Empfänger-Geräts von einem Austauschserver erhalten wird, welcher Emailübertragung/-empfang weiterleitet.

7. Sender-Kommunikationsendgerät nach Anspruch 1, wobei der Ermittlungsabschnitt (14) einen Zeichencode ausschließt, dessen Schriftartinformation zuvor gesendet worden ist, aus nichtanzeigbaren Zeichencodes, welche auf dem Empfänger-Gerät nicht reproduzierbar sind.

8. Sender-Kommunikationsendgerät nach Anspruch 2, wobei Information über anzeigbare Zeichencodes, welche auf dem Empfänger-Gerät reproduzierbar sind, im Vorraus bereitgehalten wird.

9. Sender-Kommunikationsendgerät nach Anspruch 8, wobei die Information über anzeigbare Zeichencodes für jede Adresse eines Adressbuchs bereitgehalten wird.

10. Sender-Kommunikationsendgerät nach Anspruch 9, wobei die Information über anzeigbare Zeichencodes für jede Schriftartgruppe bereitgehalten wird.

11. Sender-Kommunikationsendgerät nach Anspruch 3, wobei der Ermittlungsabschnitt (14) vor dem Senden der Email das Empfänger-Gerät darüber abfragt, ob die Email irgendwelche nichtanzeigbaren Zeichencodes enthält.

12. Sender-Kommunikationsendgerät nach Anspruch 11, wobei der Ermittlungsabschnitt (14) die Abfrageergebnisse in einem Adressbuch als Information speichert.

13. Sender-Kommunikationsendgerät nach Anspruch 1, wobei der Ermittlungsabschnitt (14) einen Zeichencode ermittelt, welcher durch einen Nutzer als ein Zeichencode festgelegt worden ist, dessen Anzeigeinhalt an das Empfänger-Gerät gesendet werden muss.

14. Empfänger-Kommunikationsendgerät (7) mit eingebauten Emailfunktionen und einem Empfangsabschnitt (71) zum Empfangen einer Email,
**gekennzeichnet durch**
einen Ermittlungsabschnitt (72) zum Ermitteln, ob die vom Empfangsabschnitt (71) empfangene Email eine angehängte Datei aufweist, welche Schriftartinformation enthält, in welcher in der Email verwendete Zeichencodes mit ihren entsprechenden auf einem Bildschirm anzuzeigenden Inhalten verbunden sind; einen Dekomprimierungsabschnitt (73) zum Dekomprimieren der die Schriftartinformation enthaltenden Datei, wenn der Ermittlungsabschnitt (72) ermittelt, dass die Email eine angehängte Datei aufweist;
einen Speicherabschnitt (75) zum Speichern der **durch** den Dekomprimierungsprozess **durch** den Dekomprimierungsabschnitt (73) erhaltenen Schriftartinformation; und
einen Verarbeitungsabschnitt (74) zum Reproduzieren von in der **durch** den Empfangsabschnitt (71) empfangenen Email verwendeten Zeichencodes **durch** Bezug auf die im Speicherabschnitt (75) gespeicherte Schriftartinformation.

15. Empfänger-Kommunikationsendgerät nach Anspruch 14, wobei,
wenn eine Vielzahl von Teilen von Schriftartinformation für einen einzelnen Zeichencode vorliegen, jeder Teil der Schriftartinformation eine Prioritätsstufe zur Bildschirmanzeige zugewiesen und im Speicherabschnitt (75) gespeichert wird, und
der Verarbeitungsabschnitt (74) in Übereinstimmung mit den Prioritätsstufen einen für die Reproduktion zu verwendenden Teil der Schriftartinformation auswählt.

16. Empfänger-Kommunikationsendgerät nach Anspruch 14, wobei,
wenn eine Vielzahl von Teilen von Schriftartinformation für einen einzelnen Zeichencode vorliegen, jeder Teil der Schriftartinformation im Speicherabschnitt (75) gespeichert wird, um entweder mit einem Sender oder einer Email verbunden zu verwenden, und
der Verarbeitungsabschnitt (74) in Übereinstimmung mit einem Sender, welcher die Email gesendet hat oder mit einer Email, einen für die Reproduktion zu verwendenden Teil der Schriftartinformation auswählt.

17. Empfänger-Kommunikationsendgerät nach Anspruch 14, wobei, wenn eine Vielzahl von Teilen von Schriftartinformation für einen einzelnen Zeichencode vorliegen, der Verarbeitungsabschnitt (74) einen ersten Teil abgerufener Schriftartinformation zum Reproduzieren des Zeichencodes verwendet.

18. Empfänger-Kommunikationsendgerät nach Anspruch 14, wobei, wenn eine Vielzahl von Teilen von Schriftartinformation für einen einzelnen Zeichencode vorliegen, der Verarbeitungsabschnitt (74) einem Nutzer die Vielzahl der Teile der Schriftartinformation vorlegt, so dass der Nutzer eine aus der Vielzahl der Teile der Schriftartinformation auswählen kann.

19. Empfänger-Kommunikationsendgerät nach Anspruch 17, wobei der Verarbeitungsabschnitt (74) einem Nutzer meldet, dass der Zeichencode reproduzierbar ist, selbst bei Benutzung von Schriftartinformation, welche anders ist als der erste Teil der abgerufenen Schriftartinformation.

20. Empfänger-Kommunikationsendgerät nach Anspruch 14, wobei der Ermittlungsabschnitt (72) ermittelt, ob eine an die Email angehängte Datei eine Schriftartinformationsdatei ist, durch eine Dateinamenerweiterung dieser.

21. Empfänger-Kommunikationsendgerät nach Anspruch 14, wobei der Ermittlungsabschnitt (72) ermittelt, ob eine an die Email angehängte Datei eine Schriftartinformationsdatei ist, durch vorgegebene Information, welche in einem Hauptteil oder Kopf der Email eingebettet ist und welche angibt, dass Schriftartinformation vorliegt.

22. Empfänger-Kommunikationsendgerät nach Anspruch 14, wobei der Ermittlungsabschnitt (72) ermittelt, ob eine an die Email angehängte Datei eine Schriftartinformationsdatei ist, indem geprüft wird, ob ein Hauptteil der Email irgendwelche nichtanzeigbare Zeichencodes enthält.

23. Empfänger-Kommunikationsendgerät nach Anspruch 14, wobei, wenn der Verarbeitungsabschnitt (74) selbst durch Bezug auf die im Speicherabschnitt (75) gespeicherte Schriftartinformation nicht alle der in der Email verwendeten Zeichencodes reproduzieren kann, der Verarbeitungsabschnitt (74) ein Sender-Kommunikationsendgerät, welches die Email gesendet hat, auffordert, weitere Schriftartinformation zu senden.

24. Empfänger-Kommunikationsendgerät nach Anspruch 14, des Weiteren umfassend einen Emailerzeugungsabschnitt zum Erzeugen einer Email auf Grund einer Nutzereingabe unter Verwendung der im Speicherabschnitt (75) gespeicherten Schriftartinformation.

25. Empfänger-Kommunikationsendgerät nach Anspruch 15, wobei Schriftartinformation, welche als eine Datei an eine Email angehängt worden ist, die höchste Prioritätsstufe zugewiesen wird, wenn die Email angezeigt wird.

26. Empfänger-Kommunikationsendgerät nach Anspruch 15, wobei die Prioritätsstufe der Schriftartinformation durch einen Nutzer zugewiesen wird.

27. Empfänger-Kommunikationsendgerät nach Anspruch 14, wobei, wenn der Speicherabschnitt (75) keinen ausreichenden Speicher zum Speichern zusätzlicher durch den Dekomprimierungsprozess durch den Dekomprimierungsabschnitt (73) erhaltener Schriftartinformation aufweist, der Speicherabschnitt (75) ein oder mehr Teile gegenwärtig gespeicherter Schriftartinformation löscht.

28. Empfänger-Kommunikationsendgerät nach Anspruch 27, wobei die zu löschende gegenwärtig gespeicherte Schriftartinformation auf Grund zumindest einer Eigenschaft dieser ermittelt wird, welche aus einer Gruppe ausgewählt wird, die aus einer darauf bezogenen Häufigkeit, einem letzten Bezugsdatum und einem Speicherdatum besteht.

29. Empfänger-Kommunikationsendgerät nach Anspruch 27, wobei die zu löschende gegenwärtig gespeicherte Schriftartinformation durch einen Nutzerbefehl ermittelt wird.

30. Empfänger-Kommunikationsendgerät nach Anspruch 14, wobei die im Speicherabschnitt (75) gespeicherte Schriftartinformation zur selben Zeit gelöscht wird, wie alle mit der Schriftartinformation verbundenen Emails gelöscht werden.

31. Empfänger-Kommunikationsendgerät nach Anspruch 14, wobei die im Speicherabschnitt (75) gespeicherte Schriftartinformation zur selben Zeit gelöscht wird, wie eine Email mit daran angehängter Schriftartinformation gelöscht wird.

32. Verarbeitungsverfahren zum Emailsenden, welches durch ein Kommunikationsendgerät mit eingebauten Emailfunktionen ausgeführt wird, umfassend die Schritte:
Erstellen einer Email auf Grund einer Nutzereingabe und Senden der erstellten Email,
**gekennzeichnet durch** die folgenden weiteren Schritte:
Ermitteln unter in der erstellten Email verwendeten Zeichencodes, ob es einen Zeichencode gibt, dessen Anzeigeinhalt an ein Empfänger-Gerät gesendet werden muss;
Erstellen einer Datei, welche Schriftartinformation über den ermittelten Zeichencode enthält, wobei die Schriftartinformation, in welcher in einer Email Zeichencodes zu verwenden sind, mit ihren entsprechenden auf einem Bildschirm anzuzeigenden Inhalten verbunden sind; und
Senden der erstellten Email mit der daran angehängten erstellten Datei.

33. Verarbeitungsverfahren zum Emailempfangen, welches durch ein Kommunikationsendgerät mit eingebauten Emailfunktionen ausgeführt wird, umfassend den Schritt:
Empfangen einer Email; und
**gekennzeichnet durch** die folgenden weiteren Schritte:
Ermitteln, ob die empfangene Email eine angehängte Datei aufweist, welche Schriftartinformation enthält, in welcher in der Email verwendete Zeichencodes mit ihren entsprechenden auf einem Bildschirm anzuzeigenden Inhalten verbunden sind; wenn ermittelt wird, dass die empfangene Email eine angehängte Schriftartinformation enthaltende Datei aufweist, Dekomprimieren der Schriftartinformation enthaltenden Datei; und
Reproduzieren in der empfangenen Email verwendeter Zeichencodes **durch** Bezug auf die im Dekomprimierungsschritt erhaltene Schriftartinformation.

34. Computerprogramm, umfassend Programmcode-Mittel zum Ausführen aller Schritte des Anspruchs 32, wenn das Programm auf einem Kommunikationsendgerät mit eingebauten Emailfunktionen läuft.

35. Computerprogramm, umfassend Programmcode-Mittel zum Ausführen aller Schritte des Anspruchs 33, wenn das Programm auf einem Kommunikationsendgerät mit eingebauten Emailfunktionen läuft.

36. Computerprogramm nach Anspruch 34, welches auf einem computerlesbaren Speichermedium gespeichert ist.

37. Computerprogramm nach Anspruch 35, welches auf einem computerlesbaren Speichermedium gespeichert ist.

## Revendications

1. Terminal de communication (1) de l'expéditeur présentant des fonctions de messagerie électronique intégrées et une section d'émission (16) pour l'émission d'un courrier électronique,
**caractérisé par**
une section d'enregistrement (12) pour enregistrer les informations de police dans lesquelles les codes de caractères à utiliser dans un courrier électronique sont associés à leurs contenus correspondants à afficher sur un écran ;
une section de détermination (14) pour déterminer parmi les codes de caractères utilisés dans un courrier électronique s'il existe un code de caractères dont le contenu d'affichage doit être envoyé vers un appareil de réception ;
une section de création de fichiers (15) pour créer un fichier contenant les informations de police sur le code de caractères déterminé dans la section de détermination (14) ; et
la section d'émission (16) étant adaptée à l'émission du courrier électronique avec le fichier créé dans la section de création de fichiers (15) joint.

2. Terminal de communication de l'expéditeur selon la revendication 1, dans lequel la section de détermination (14) détermine un code de caractères non affichables qui ne peut pas être reproduit sur l'appareil de réception, étant donné qu'il s'agit d'un code de caractères dont le contenu d'affichage doit être envoyé vers l'appareil de réception.

3. Terminal de communication de l'expéditeur selon la revendication 2, dans lequel la section de détermination (14) réalise une détermination d'après les informations sur les codes de caractères non affichables fournis par l'appareil de réception.

4. Terminal de communication de l'expéditeur selon la revendication 2, dans lequel le code de caractères non affichables est déterminé d'après au moins un élément sélectionné parmi le groupe constitué d'un relayeur, d'un fabricant, et d'un modèle de l'appareil de réception.

5. Terminal de communication de l'expéditeur selon la revendication 4, dans lequel le relayeur est identifié par un élément parmi un numéro de téléphone et un domaine d'une adresse de courrier électronique de l'appareil de réception.

6. Terminal de communication de l'expéditeur selon la revendication 4, dans lequel les informations sur le relayeur, le fabricant, et le modèle de l'appareil de réception sont obtenues à partir d'un serveur d'échange qui relaie l'émission/la réception du courrier électronique.

7. Terminal de communication de l'expéditeur selon la revendication 1, dans lequel la section de détermination (14) exclut un code de caractères dont les informations de police ont déjà été envoyées, des codes de caractères non affichables qui ne peuvent être reproduits sur l'appareil de réception.

8. Terminal de communication de l'expéditeur selon la revendication 2, dans lequel les informations sur les codes de caractères affichables qui peuvent être reproduits sur l'appareil de réception sont connues à l'avance.

9. Terminal de communication de l'expéditeur selon la revendication 8, dans lequel les informations sur les codes de caractères affichables sont connues pour chaque adresse d'un carnet d'adresses.

10. Terminal de communication de l'expéditeur selon la revendication 9, dans lequel les informations sur les codes de caractères affichables sont connues pour chaque groupe de polices.

11. Terminal de communication de l'expéditeur selon la revendication 3, dans lequel la section de détermination (14) interroge, avant d'envoyer le courrier électronique, l'appareil de réception pour savoir si le courrier électronique contient des codes de caractères non affichables.

12. Terminal de communication de l'expéditeur selon la revendication 11, dans lequel la section de détermination (14) enregistre les résultats de l'interrogation dans un carnet d'adresses comme informations.

13. Terminal de communication de l'expéditeur selon la revendication 1, dans lequel la section de détermination (14) détermine un code de caractères spécifié par un utilisateur comme étant un code de caractères dont le contenu d'affichage doit être envoyé vers l'appareil de réception.

14. Terminal de communication du destinataire (7)
présentant des fonctions de messagerie électronique intégrées et une section de réception (71) pour recevoir un courrier électronique,
**caractérisé par**
une section de détermination (72) pour déterminer si le courrier électronique reçu par la section de réception (71) comporte un fichier joint contenant les informations de police dans lesquelles les codes de caractères utilisés dans le courrier électronique sont associés à leurs contenus correspondants à afficher sur un écran ;
une section de décompression (73) pour décompresser, si la section de détermination (72) détermine que le courrier électronique comporte un fichier joint, le fichier contenant les informations de police ;
une section d'enregistrement (75) pour enregistrer les informations de police obtenues par la méthode de décompression par la section de décompression (73) ; et
une section de traitement (74) pour reproduire les codes de caractères utilisés dans le courrier électronique reçu par la section de réception (71), en se reportant aux informations de police enregistrées dans la section d'enregistrement (75).

15. Terminal de communication du destinataire selon la revendication 14, dans lequel
si une pluralité d'informations de police existe pour un seul code de caractères, un niveau de priorité est attribué à chaque information de police pour l'affichage à l'écran et chaque information de police est enregistrée dans la section d'enregistrement (75), et
la section de traitement (74) sélectionne une information de police à utiliser pour la reproduction, conformément aux niveaux de priorité.

16. Terminal de communication du destinataire selon la revendication 14, dans lequel
si une pluralité d'informations de police existe pour un seul code de caractères, chaque information de police est enregistrée dans la section d'enregistrement (75) de manière à être associée à un expéditeur et à un courrier électronique, et
la section de traitement (74) sélectionne une information de police à utiliser pour la reproduction, conformément à un expéditeur qui a envoyé le courrier électronique ou conformément à un courrier électronique.

17. Terminal de communication du destinataire selon la revendication 14, dans lequel si une pluralité d'informations de police existe pour un seul code de caractères, la section de traitement (74) utilise une première information de police récupérée pour reproduire le code de caractères.

18. Terminal de communication du destinataire selon la revendication 14, dans lequel si une pluralité d'informations de police existe pour un seul code de caractères, la section de traitement (74) présente à un utilisateur la pluralité d'informations de police afin que l'utilisateur puisse sélectionner une information parmi la pluralité d'informations de police.

19. Terminal de communication du destinataire selon la revendication 17, dans lequel la section de traitement (74) indique à un utilisateur que le code de caractères peut être reproduit même en utilisant des informations de polices différentes de la première information de police récupérée.

20. Terminal de communication du destinataire selon la revendication 14, dans lequel la section de détermination (72) détermine si un fichier joint au courrier électronique est un fichier d'informations de police grâce à son extension de nom de fichier.

21. Terminal de communication du destinataire selon la revendication 14, dans lequel la section de détermination (72) détermine si un fichier joint au courrier électronique est un fichier d'informations de police grâce aux informations prédéterminées qui sont intégrées à un corps ou à un en-tête du courrier électronique et qui indiquent que des informations de police sont présentes.

22. Terminal de communication du destinataire selon la revendication 14, dans lequel la section de détermination (72) détermine si un fichier joint au courrier électronique est un fichier d'informations de police en vérifiant si un corps du courrier électronique contient des codes de caractères non affichables.

23. Terminal de communication du destinataire selon la revendication 14, dans lequel si la section de traitement (74) ne peut reproduire tous les codes de caractères utilisés dans le courrier électronique même en se reportant aux informations de police enregistrées dans la section d'enregistrement (75), la section de traitement (74) interroge un terminal de communication de l'expéditeur qui a envoyé le courrier électronique pour envoyer d'autres informations de police.

24. Terminal de communication du destinataire selon la revendication 14, comprenant en outre une section de création de courrier électronique pour la création d'un courrier électronique basé sur l'entrée d'un utilisateur, à l'aide des informations de police enregistrées dans la section d'enregistrement (75).

25. Terminal de communication du destinataire selon la revendication 15, dans lequel le plus haut niveau de priorité est attribué aux informations de police qui ont été jointes sous forme de fichier à un courrier électronique lorsque le courrier électronique s'affiche.

26. Terminal de communication du destinataire selon la revendication 15, dans lequel le niveau de priorité des informations de police est attribué par un utilisateur.

27. Terminal de communication du destinataire selon la revendication 14, dans lequel si la section d'enregistrement (75) n'a pas suffisamment d'espace pour enregistrer les informations de police supplémentaires obtenues par la méthode de décompression par la section de décompression (73), la section d'enregistrement (75) supprime une ou plusieurs informations des informations de police actuellement enregistrées.

28. Terminal de communication du destinataire selon la revendication 27, dans lequel les informations de police actuellement enregistrées à supprimer sont déterminées d'après au moins une de leurs propriétés sélectionnée dans le groupe constitué d'une fréquence à laquelle il faut se reporter, une date de la dernière référence, et une date d'enregistrement.

29. Terminal de communication du destinataire selon la revendication 27, dans lequel les informations de police actuellement enregistrées à supprimer sont déterminées par l'instruction d'un utilisateur.

30. Terminal de communication du destinataire selon la revendication 14, dans lequel les informations de police enregistrées dans la section d'enregistrement (75) sont supprimées simultanément tandis que tous les courriers électroniques associés aux informations de police sont supprimés.

31. Terminal de communication du destinataire selon la revendication 14, dans lequel les informations de police enregistrées dans la section d'enregistrement (75) sont supprimées simultanément tandis qu'un courrier électronique auquel sont jointes des informations de police est supprimé.

32. Procédé de traitement pour l'émission de courrier électronique réalisé par un terminal de communication présentant des fonctions de messagerie électronique intégrées, comprenant les états consistant à :
créer un courrier électronique d'après l'entrée d'un utilisateur et envoyer le courrier électronique créé,
**caractérisé par** les étapes suivantes consistant à :
déterminer parmi les codes de caractères utilisés dans le courrier électronique créé s'il existe un code de caractères dont le contenu d'affichage doit être envoyé vers un appareil de réception ;
créer un fichier contenant des informations de police sur le code de caractères déterminé, les informations de police dans lesquelles les codes de caractères à utiliser dans un courrier électronique sont associés à leurs contenus correspondants à afficher sur un écran ; et
envoyer le courrier électronique créé avec le fichier créé joint.

33. Procédé de traitement pour la réception de courrier électronique réalisé par un terminal de communication présentant des fonctions de courrier électronique intégrées, comprenant l'étape consistant à :
recevoir un courrier électronique ; et
**caractérisé par** les étapes suivantes consistant à :
déterminer si le courrier électronique reçu comporte un fichier joint contenant des informations de police dans lesquelles les codes de caractères utilisés dans le courrier électronique sont associés à leurs contenus correspondants à afficher sur un écran ;
s'il est déterminé que le courrier électronique reçu comporte un fichier joint contenant des informations de police, décompresser le fichier contenant les informations de police ; et
reproduire les codes de caractères utilisés dans le courrier électronique reçu, en se reportant aux informations de police obtenues à l'étape de décompression.

34. Programme d'ordinateur comprenant un moyen de code de programme pour réaliser toutes les étapes de la revendication 32 lorsque ledit programme fonctionne sur un terminal de communication présentant des fonctions de courrier électronique intégrées.

35. Programme d'ordinateur comprenant un moyen de code de programme pour réaliser toutes les étapes de la revendication 33 lorsque ledit programme fonctionne sur un terminal de communication présentant des fonctions de courrier électronique intégrées.

36. Programme d'ordinateur de la revendication 34, enregistré sur un support d'enregistrement lisible par un ordinateur.

37. Programme d'ordinateur de la revendication 35, enregistré sur un support d'enregistrement lisible par un ordinateur.
